# EUROPEAN PATENT APPLICATION

(11) **EP 4 527 593 A1**
(43) Date of publication of application: **26.03.2025**
(21) Application number: 23199291.8
(22) Date of filing: 25.09.2023
(51) Int. Cl.: B29C 65/16, F21S 41/00

(54) **AUTOMOTIVE LIGHTING UNIT AND RELATIVE PRODUCTION METHOD**

(71) Applicant: Marelli Automotive Lighting Italy S.p.A. Con Socio Unico, 10078 Venaria Reale (TO) (IT)
(72) Inventor: BUZZURRO, Alessandro, 33028 TOLMEZZO (UD) (IT); FERIGO, Domenico, 33028 TOLMEZZO (UD) (IT)
(74) Representative: Studio Torta S.p.A.

(57) **Abstract**

An automotive lighting unit (1) comprising: a concave rear casing (2), which is made of opaque polymeric material and is adapted to be fixed to the vehicle body; a front half-shell (3), which is arranged to close the mouth of said rear casing (2) and is provided with at least one transparent or semitransparent sector; and at least one lighting assembly (4), which is located inside the rear casing (2), is adapted to backlight the front half-shell (3) and includes at least one internal component (5), which is at least partially made of opaque polymeric material, rests with its part/portion made of opaque polymeric material on the inner surface of the rear casing (2), in at least one contact area (6), and is rigidly secured to said rear casing (2) by means of a laser welding joint (7) made at said contact area (6).

## Description

### TECHNICAL FIELD

The present invention relates to an automotive lighting unit and to the relative production method.

More specifically, the present invention preferably relates to a production method of a headlight or a taillight for cars and similar motor vehicles. Use to which the following disclosure will make explicit reference without thereby losing in generality.

### STATE OF THE ART

As known, a headlight or a taillight for cars and similar motor vehicles is conventionally an electrically-powered lighting apparatus, which is specifically structured to be placed in the front, rear or lateral part of the vehicle, and performs the function of lighting the area surrounding the vehicle and/or signalling the position of the vehicle, sudden deceleration of the vehicle and/or turning direction of the vehicle, in compliance with given photometric type-approval standards.

The majority of taillights for cars and similar motor vehicles usually comprise: a rear casing with substantially rigid and opaque structure, which is substantially basin-shaped and is structured so as to be stably recessed into a compartment specifically realized in the rear part of the vehicle body; a front half-shell with substantially rigid and transparent structure, separate and distinct from the rear casing, which has a shape complementary to the mouth of the rear casing and is arranged to close the mouth of the rear casing usually so as to surface outside of the vehicle body; and a series of electrically-powered lighting assemblies, which are located inside the rear casing, each one immediately beneath a corresponding transparent or semi-transparent sector of the front half-shell, so as to selectively backlight the overlying transparent or semi-transparent sector of the front half-shell.

Generally each transparent or semi-transparent sector of the front half-shell is moreover uniquely associated with a specific light signal, hence the various lighting assemblies present inside the hollow housing formed/delimited by the front half-shell and by the rear casing are structured so as to emit, on command, a light beam that, once exited from the lighting unit through the corresponding transparent or semi-transparent sector of the half-shell, meets the photometric type-approval standards (colour and distribution of the light) specified for said light signal.

Currently, both the rear casing and the front half-shell have a monolithic structure and are made of polymeric material via injection moulding.

In further detail, the rear casing is made entirely of polymeric material opaque to visible light, while the front half-shell is made entirely or almost entirely of transparent and/or semi-transparent polymeric material.

In the most modern taillights, furthermore, the front half-shell is joined in a rigid non-removable manner to the rear casing via a laser welding that runs along the entire perimeter rim of the mouth of the rear casing.

The lighting assemblies located inside the rear casing usually use a series of LEDs (acronym of Light Emitting Diode) as light sources, and generally also include one or more reflector bodies that reflect the light produced by the LEDs towards the facing transparent or semi-transparent sector of the front half-shell, and/or one or more light-guide bodies that collect the light produced by the LEDs and channel it by total internal reflection to the facing transparent or semi-transparent sector of the front half-shell.

In addition, the lighting assemblies usually moreover comprise filters, corrective optics, shielding masks and/or other active and/or passive optical devices, which are capable of adapting the light beam emitted by the various LEDs to the photometric and aesthetic requirements connected to automotive use.

Lastly, the lighting assemblies described above also include internal bezels, brackets and/or other support members that fit into the rear casing, or more simply rest on the inner surface of the rear casing, and are structured to support the reflector body or bodies, the light-guide body or bodies, the printed circuit board or boards accommodating the LEDs, the electric wiring that powers and/or controls the printed circuit board or boards, and/or the other active and/or passive optical devices which contribute to forming each lighting assembly.

Due to construction requirements, furthermore, the majority of the internal lighting components that contribute to forming the lighting assemblies and/or to fixing the lighting assemblies to the rear casing are currently made of polymeric material opaque to visible light, with the casing anchoring problems that this entails.

Almost all the internal components made of opaque polymeric material, in fact, are firmly fixed to the rear casing by means of a series of self-threading metal screws, the majority of which are inserted in pass-through manner in the rear casing from the outside towards the inside of the taillight, so as to arrange the head of the screw in abutment against the outer surface of the casing.

In addition, some internal lighting components are retained inside the rear casing also by a series of shoulders, centring pins and/or snap-on locking tabs present inside the rear casing.

However, these centring and/or snap-on locking systems are used only during the assembly of the taillight, up to the insertion of the self-threading screws, because they are generally unable to withstand the mechanical vibrations which automotive lighting units are normally subject to during use.

Currently, therefore, self-threading screws are the only means able to secure the main components or macro-components of the automotive lighting unit firmly in place inside the rear casing for the entire life of the automotive lighting unit.

As a consequence, the assembly lines for automotive lighting units are currently provided with a series of automatic or semi-automatic screwdrivers, which enable the operators working on the assembly line to place and screw the self-threading screws into the rear casing as rapidly as possible.

Unfortunately, although essential for realizing the taillight, the self-threading screws make the assembly of the taillight relatively laborious and also significantly affect the overall weight and cost of the light. Being made of metal, in fact, the self-threading screws are some of the most costly components of the lighting unit.

In addition, the self-threading screws occasionally jam inside the automatic screwdriver, making the tool unserviceable, with all the problems that this entails. Restoring the automatic or semi-automatic screwdriver, in fact, can require several minutes, during which the assembly line is necessarily at a standstill.

### SUMMURY OF THE INVENTION

Aim of the present invention is to eliminate or in any case minimize the use of self-threading screws, so as to simplify and speed up the assembly of automotive lighting units.

In accordance with these aims, according to the present invention there is provided an automotive lighting unit as defined in claim 1 and preferably, though not necessarily, in any one of the dependent claims.

In addition, according to the present invention there is provided an automotive-lighting-unit production method as defined in claim 11 and preferably, though not necessarily, in any one of the dependent claims.

### BRIEF DESCRIPTION OF THE FIGURES

The present invention will now be described with reference to the attached drawings, which illustrate a non-limiting embodiment example thereof, in which:
- Figures 1 and 2 are perspective views of an automotive lighting unit realized according to the teachings of the present invention, with parts removed for clarity's sake;
- Figure 3 is a partially exploded perspective view of the automotive lighting unit illustrated in Figures 1 and 2, with parts removed for clarity's sake;
- Figure 4 is a lateral view of the automotive lighting unit illustrated in Figures 1, 2 and 3, with parts in section and parts removed for clarity's sake;
- Figure 5 is a perspective view of the rear casing of the automotive lighting unit illustrated in the preceding figures, with parts removed for clarity's sake;
- Figure 6 is a second lateral view of the automotive lighting unit illustrated in the preceding figures, with parts in section and parts removed for clarity's sake;
- Figures 7, 8 and 9 schematically illustrate some steps of the assembly of the automotive lighting unit illustrated in the preceding figures, with parts in section and parts removed for clarity's sake; whereas
- Figure 10 is a lateral view of a variation of the automotive lighting unit illustrated in Figures 1, 2 and 3, with parts in section and parts removed for clarity's sake.

### DETAILED DISCLOSURE OF THE EMBODIMENTS

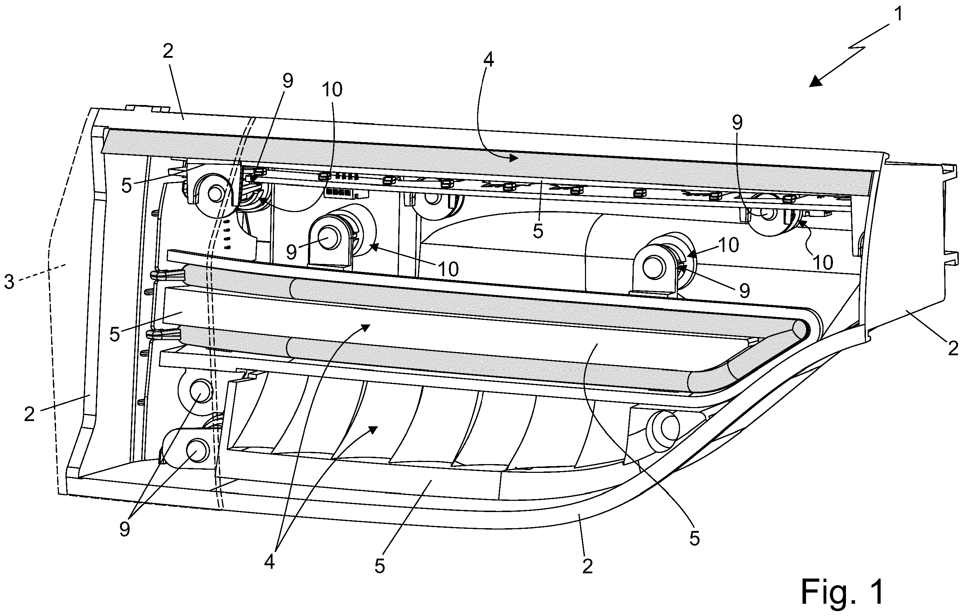

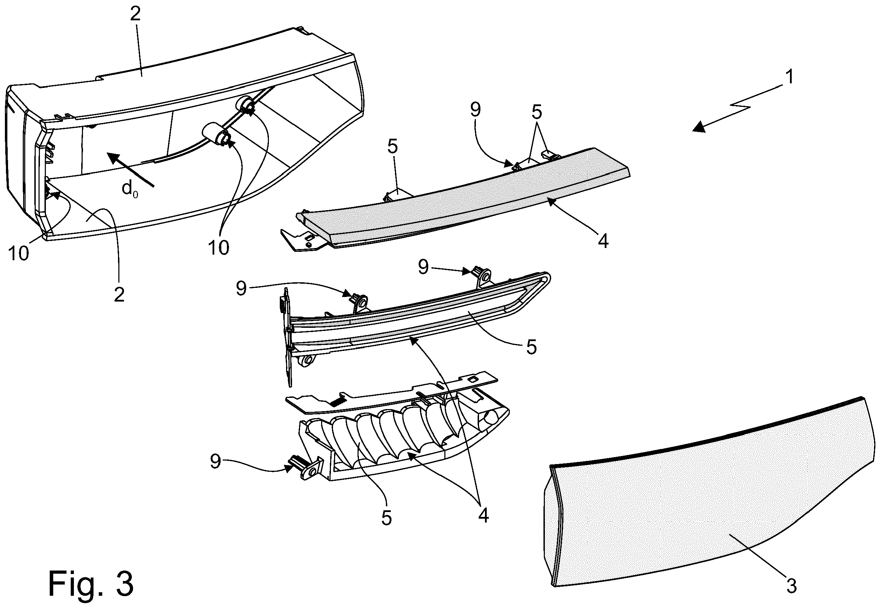

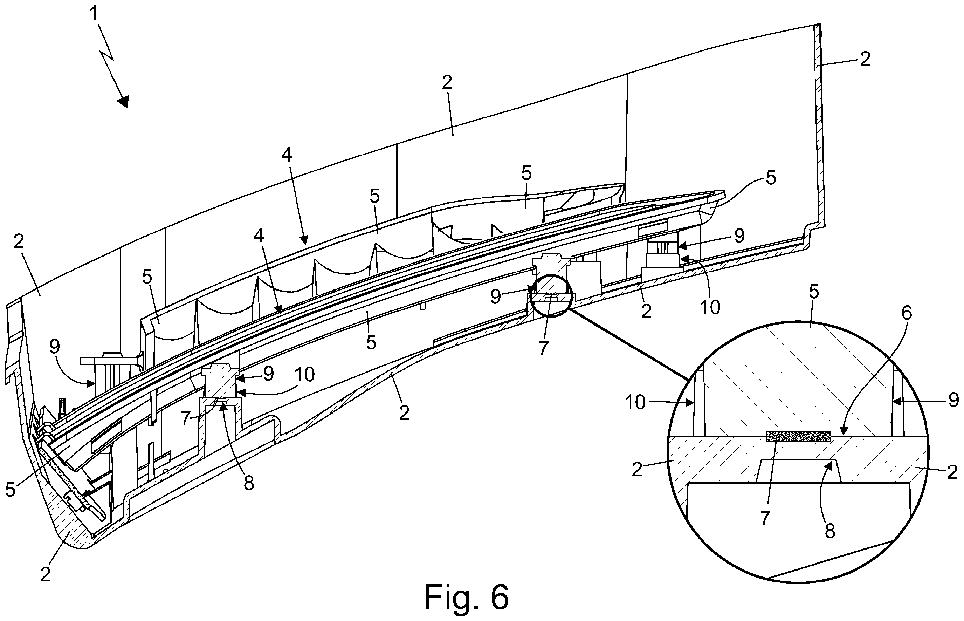

With reference to Figures 1 to 6, number 1 denotes as a whole an automotive lighting unit, i.e. a light apparatus adapted to be firmly fixed on the front or rear part of the vehicle body of a motor vehicle, with the function of emitting light signals adapted to signal/indicate the position of the vehicle and/or sudden deceleration of the vehicle and/or turning direction of the vehicle during travel and/or with the function of lighting the area surrounding the vehicle.

In other words, the automotive lighting unit 1 is adapted to be fixed on the front or rear part of the vehicle body of a car, van, lorry, motorcycle or other similar motor vehicle, to perform the function of a headlight or taillight.

Optionally, the automotive lighting unit 1 may also be used to display luminous signs and/or graphic or alphanumeric symbols.

Clearly the automotive lighting unit 1 may also be placed on a lateral side of the car or other similar motor vehicle.

Preferably the automotive lighting unit 1 is also structured so as to be stably recessed in the vehicle body (not shown) and to surface outside of the latter.

In the example shown, in particular, the automotive lighting unit 1 is preferably structured to be stably recessed in the rear part of the vehicle body of a car or other similar motor vehicle.

In other words, the automotive lighting unit 1 is preferably a taillight for cars and the like.

Obviously, in a different embodiment, the automotive lighting unit 1 may also be structured so as to be simply cantilever-fixed to the front, lateral or rear part of the vehicle body (not shown).

With reference to Figures 1 to 6, the automotive lighting unit 1 firstly comprises: a rear casing 2 with a substantially rigid and opaque to visible light structure, which is concave in shape and is adapted to be firmly fixed on the vehicle body (not illustrated), preferably inside a seat purposely realized in said vehicle body; and a front half-shell 3 with a substantially rigid and at least partially transparent structure, separate and distinct from the rear casing 2, which has a roughly lenticular shape/structure and is firmly fixed to the rear casing 2 to at least partially close the mouth of the latter, so as to form/delimit, together with the rear casing 2, a rigid internally hollow housing. Preferably the front half-shell 3 is moreover shaped/structured so as to surface outside of the vehicle body.

In addition, the automotive lighting unit 1 also comprises one or more lighting assemblies 4, which is/are located inside the rear casing 2 and is/are adapted to backlight, on command, the front half-shell 3.

In further detail, with reference to Figures 1 to 6, the rear casing 2 is preferably shaped substantially in the form of an, advantageously oblong, basin and/or has a nominal thickness preferably ranging 2 and 4 mm (millimetres).

In addition, the rear casing 2 preferably has a monolithic structure, and is made mainly of polymeric material opaque to visible light advantageously via injection moulding.

Preferably the rear casing 2 is also provided, on the outer surface, with a series of fixing appendages that allow the rear casing 2 to be rigidly attached to the vehicle body (not illustrated).

In the example shown, in particular, the rear casing 2 is preferably made of acrylonitrile-butadiene-styrene (ABS) or other thermoplastic polymeric material, advantageously filled with carbon black or other opacifying pigments.

Obviously, in a different embodiment, the rear casing 2 may also be shaped and/or structured so as to be at least partially recessed into a seat purposely realized in the front or lateral part of the vehicle body (not illustrated), or so as to be simply cantilever-fixed on the front, lateral or rear part of the vehicle body.

The front half-shell 3, on the other hand, is preferably shaped/structured so as to substantially entirely close the mouth of rear casing 2. In other words, the front half-shell 3 is preferably shaped so as to form/delimit, together with the rear casing 2, a rigid and internally hollow, closed housing.

In addition, the front half-shell 3 is preferably provided with one or more transparent or semi-transparent sectors (namely sectors that allow the passage of visible light), optionally also having different colours from one another, and is rigidly fixed to the rear casing 2 preferably in a substantially fluid-tight manner.

Clearly the front half-shell 3 may also include one or more opaque sectors adjoining said transparent or semi-transparent sector or sectors.

In further detail, the front half-shell 3 preferably has a shape substantially complementary to the mouth of the rear casing 2, and is fixed to the rear casing 2 along the perimeter rim of said mouth.

In addition, the front half-shell 3 preferably has a monolithic structure, and is preferably made mainly of a transparent polymeric material advantageously via injection moulding.

Preferably the front half-shell 3 is furthermore directly fixed or welded to the rear casing 2 substantially seamlessly along the whole perimeter rim of the mouth of rear casing 2.

In the example shown, in particular, the front half-shell 3 is preferably made of transparent polycarbonate (PC), transparent polymethylmethacrylate (PMMA) or other transparent or semi-transparent polymeric material.

Preferably the front half-shell 3 is moreover directly welded to the rear casing 2 in a known manner, via laser welding, vibration welding or hot-plate welding.

With reference to Figures 1 to 6, the/each lighting assembly 4 is preferably arranged inside the rear casing 2 so as to be locally aligned with a corresponding transparent or semi-transparent sector of front half-shell 3, in order to backlight the same transparent or semi-transparent sector of front half-shell 3, preferably separately and independently of the other lighting assemblies 4.

Preferably, the lighting assembly 4 or each of the lighting assemblies 4 is furthermore structured so as to emit, on command, a light beam that, once exited from the automotive lighting unit 1 through the front half-shell 3, meets the photometric type-approval standards (colour and light distribution) specified for a given light signal.

Clearly one or some lighting assemblies 4 may also emit a light beam that does not meet or must meet said photometric type-approval standards.

For example, one or some lighting assemblies 4 may display luminous signs and/or luminous graphic or alphanumeric symbols.

Preferably, the lighting assembly or assemblies 4 is/are furthermore electrically-powered lighting assemblies that is/ are adapted to emit light on command and is/are advantageously also entirely contained within the rear casing 2.

In other words, the automotive lighting unit 1 preferably comprises one or more electrically-powered lighting assemblies 4, each of which emits light on command and is arranged inside rear casing 2 so as to backlight, on command, a corresponding transparent or semi-transparent sector of the front half-shell 3, preferably separately and independently from the other lighting assemblies 4.

With reference to Figures 1 to 6, in particular, the automotive lighting unit 1 comprises a series of internal components, separate and distinct from the rear casing 2 and from the front half-shell 3, that are placed inside the rear casing 2 and preferably contribute to form the lighting assembly or assemblies 4.

Some of these internal components, moreover, are substantially rigid and at least partially made of polymeric material opaque to visible light.

In further detail, these internal lighting components preferably have a monolithic structure, and are advantageously made via injection moulding.

In addition, one or more of these internal lighting components at least partially made of opaque polymeric material, in the following denoted by the number 5, is/are arranged with the part/portion made of opaque polymeric material resting on the inner surface of the rear casing 2, or rather on the bottom of rear casing 2, at purposely provided contact/support areas 6, and are fixed in a rigid and non-removable manner directly to the rear casing 2 by means of at least one laser welding joint 7 made at said support/contact area or areas 6.

In other words, the/each internal lighting component 5 is provided with at least one part/portion made of opaque polymeric material, is arranged with said part/portion made of opaque polymeric material resting on the inner surface of the rear casing 2 in at least one mutual contact area 6, and is secured in a rigid and non-removable manner to the rear casing 2 by means of at least one laser welding joint 7 made at said contact area 6.

Preferably the contact area 6 between the rear casing 2 and the internal lighting component 5 is furthermore substantially flat.

At the mutual contact area 6, therefore, the rear casing 2 and the internal lighting component 5 are both made of polymeric material opaque to visible light.

In other words, the contact area 6 between the rear casing 2 and the internal lighting component 5 is formed/defined by two pieces or parts of pieces both made of polymeric material opaque to visible light.

Clearly the internal component or components 5 may also be substantially entirely made of opaque polymeric material.

The laser welding joint 7, in turn, is located inside the perimeter of the contact area 6, straddling the rear casing 2 and the adjacent opaque-polymeric-material portion made of the internal component 5.

Preferably the laser welding joint 7 is moreover substantially spotlike. Clearly the laser welding joint 7 may also have the shape of a line.

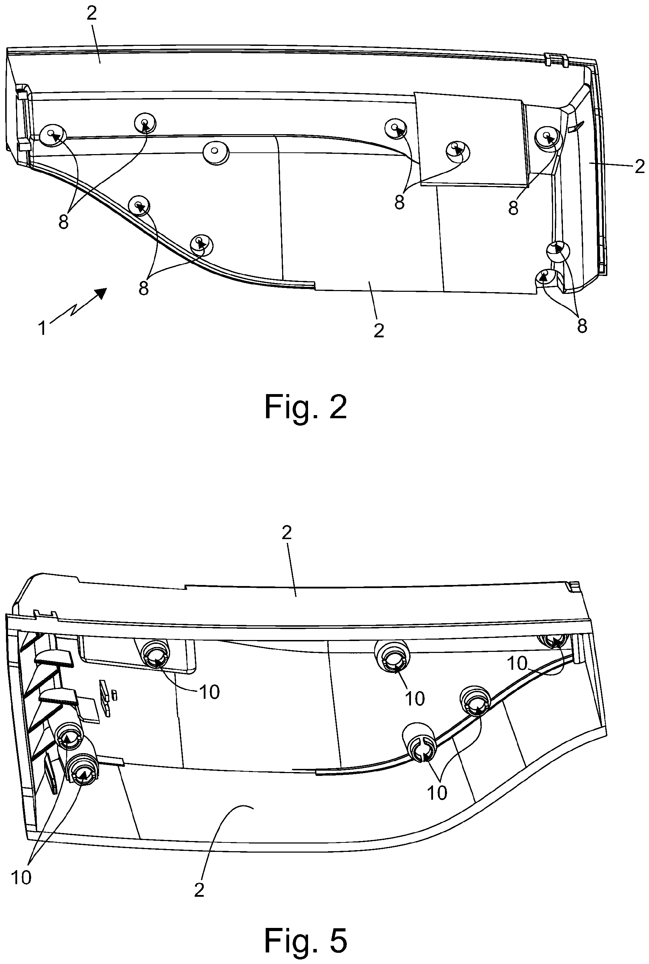

With reference to Figures 2, 4 and 6, in addition, the outer surface of rear casing 2 has, on the side opposite each laser welding joint 7 made inside the perimeter of the contact area 6 (i.e. each laser welding joint between the rear casing 2 and the adjacent opaque-polymeric-material portion made of the internal lighting component 5), a small, preferably roughly circular-shaped, thickness-reducing recess or depression 8 which is shaped so as to locally, and advantageously also suddenly, reduce the thickness W of the rear casing 2 down to a predefined limit thickness W₀.

The value of the limit thickness W₀ is selected so as to allow the laser beam that forms the laser welding joint 7 to pass through the rear casing 2 substantially without causing melting/softening of the polymeric material up to the contact area 6.

The laser welding joint 7 is therefore located behind said thickness-reducing recess 8.

In further detail, the laser welding joint 7 is preferably arranged spaced behind said thickness-reducing recess 8.

Furthermore, said thickness-reducing recess 8 preferably has a substantially step profile, and advantageously has an extension less than or equal to 30 mm² (square millimetres).

In addition, said thickness-reducing recess 8 is preferably shaped/dimensioned so that said limit thickness W₀ is lower than the mean value of the thickness W of the rear casing 2 at the contact area 6, and advantageously also lower than the nominal thickness of the rear casing 2.

Additionally or alternatively, said thickness-reducing recess 8 is preferably shaped/dimensioned so as to locally reduce the thickness of the rear casing 2 by at least 25%.

In other words, the thickness-reducing recess 8 is preferably shaped so as to locally reduce the thickness W of the rear casing 2 by at least 25% advantageously relative to the local mean value and/or the nominal thickness of the rear casing 2.

Additionally or alternatively, the thickness-reducing recess 8 is preferably shaped so as to reduce the thickness W of the rear casing 2 down to a limit thickness W₀ ranging between 1 and 2 mm (millimetres).

In the example shown, in particular, the thickness-reducing recess 8 is preferably shaped so as to reduce the thickness W of the rear casing 2 down to a limit thickness W₀ lower than or equal to 1,5 mm (millimetres).

Preferably, the distance that separates the laser welding joint 7 from the bottom of said thickness-reducing recess 8 therefore ranges between 1 mm and 1,5 mm (millimetres).

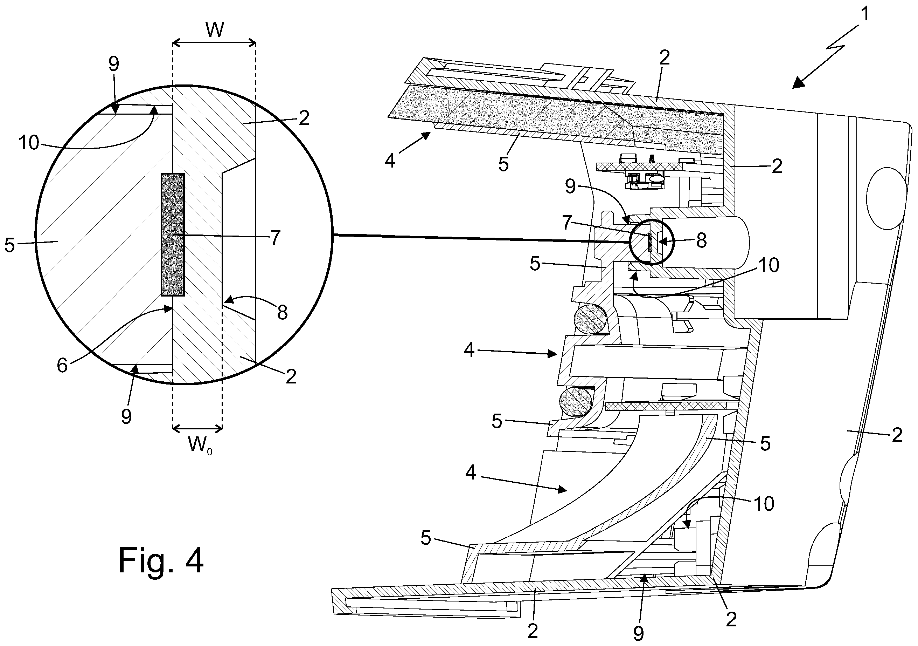

With particular reference to Figures 2 and 4, moreover the rear casing 2 and the opaque-polymeric-material portion of the internal lighting component 5 are preferably made of respective opaque polymeric materials that have, at least in the neighbourhood of the mutual contact area 6, laser-beam absorption coefficients µ (Beer-Lambert law) different one from the other.

In other words, the contact area 6 between the rear casing 2 and the internal component 5 is formed/defined by two pieces or parts of pieces made of opaque polymeric material, which preferably have laser-beam absorption coefficients µ different in value from one another.

Preferably the difference between the values of the absorption coefficients µ of the two pieces/piece parts is greater than 25%.

Clearly the laser-beam absorption coefficient µ depends on the composition of the polymeric material, the density of the polymeric material, the quantity of carbon black or other additives contained in the polymeric material per unit of volume, and/or the wavelength λ of the laser beam that penetrates into the polymeric material.

In addition, the thickness-reducing recess 8 is preferably located in the piece that is locally made of the opaque polymeric material having the lower laser-beam absorption coefficient µ.

In further detail, at least underneath the thickness-reducing recess 8 and substantially for the entire local thickness of the piece, the rear casing 2 is made of an opaque polymeric material having a laser-beam absorption coefficient µ lower than that of the opaque polymeric material that locally forms the adjacent opaque-polymeric-material part/portion of the internal component 5.

In other words, the opaque polymeric material located between the thickness-reducing recess 8, or rather the bottom of the thickness-reducing recess 8, and the contact area 6 located on the opposite side of the rear casing 2 preferably has an absorption coefficient µ lower than that of the opaque polymeric material that locally forms the internal lighting component 5, or rather the opaque-polymeric-material part/ portion of the internal component 5 that rests on the inner surface of the housing 2 at said contact area 6.

In further detail, at least at the contact area 6, the rear casing 2 is preferably made of an opaque polymeric material that has a laser-beam absorption coefficient µ lower than that of the opaque polymeric material forming the adjacent opaque-polymeric-material part/portion of the internal lighting component 5, advantageously at least by 30%.

In the example shown, in particular, the absorption coefficient µ of the opaque polymeric material forming the rear casing 2 is preferably at least 40% lower than the absorption coefficient µ of the opaque polymeric material forming the adjacent opaque-polymeric-material portion of the internal component 5.

In addition, the absorption coefficient µ of the polymeric material forming the rear casing 2 preferably ranges between 0, 05 (1/mm) and 1 (1/mm), and more advantageously between 0,1 (1/mm) and 0,2 (1/mm). The absorption coefficient µ of the polymeric material forming the opaque-polymeric-material portion made of internal lighting component 5 preferably ranges between 0,2 (1/mm) and 3 (1/mm), and more advantageously between 0,8 (1/mm) and 2 (1/mm).

Clearly, the rear casing 2 and the internal component or components 5 may be made of opaque polymeric materials having, at least in the neighbourhood of the mutual contact area 6, absorption coefficients µ substantially equal to one another.

With reference to Figures 1 to 6, preferably the rear casing 2 and the internal lighting component 5, or rather the opaque-polymeric-material part/portion of the internal component 5, are furthermore shaped/structured so as to realize, in the mutual contact area 6, a shape coupling.

In further detail, the rear casing 2 and the internal lighting component 5, or rather the opaque-polymeric-material portion of the internal component 5, are preferably shaped/structured so as to realize, in the mutual contact area(s) or zone(s) 6, a male-female coupling.

In greater detail, with reference to Figures 1, 3, 4 and 5, the/each internal lighting component 5 is preferably provided with one or more protruding fixing pins 9, each of which has at least the distal end made of polymeric material opaque to visible light, extends parallel to a given insertion direction d₀, and is adapted to arrange its distal end in abutment on the inner surface of rear casing 2 at a respective contact area 6.

The laser welding joint 7 is preferably located at the distal end of said fixing pin 9.

Preferably the distal end of the/each fixing pin 9 is therefore arranged on the opposite side of the piece, or rather of the rear casing 2, with respect to a respective thickness-reducing recess 8 of rear casing 2.

In addition, with reference to Figures 1, 3, 4 and 6, the/each fixing pin 9 is preferably moreover adapted to engage a corresponding receiving seat 10, which is preferably substantially cup-shaped, and is realized directly on the rear casing 2, or rather on the inner surface of the rear casing 2, advantageously at the bottom of the same casing.

The distal end of fixing pin 9, furthermore, is preferably adapted to stably rest on the bottom of the receiving seat 10, and therefore the contact area 6 is preferably located on the bottom of the same receiving seat 10.

Preferably each receiving seat 10 is therefore located on the opposite side of rear casing 2 with respect to a respective thickness-reducing recess 8 of the same rear casing 2.

In addition, the/each receiving seat 10 preferably also has a shape substantially complementary to that of the distal end of the relative fixing pin 9 of internal lighting component 5.

With reference to Figures 1 to 6, the internal lighting component or components 5 preferably include, for example, one or more reflector bodies and/or shielding masks and/or corrective lenses and/or diffuser filters and/or coloured lenticular filters and/or reflex reflectors and/or fixing bezels and/or brackets or other auxiliary support structures, which are clearly at least partly made of polymeric material opaque to visible light, and are arranged with the opaque-polymeric-material part resting on the inner surface of the rear casing 2.

Optionally the automotive lighting unit 1 may also comprise one or more cameras and/or one or more photosensitive sensors and/or one or more radar devices and/or one or more LiDAR (acronym of Light Detection and Ranging) instruments and/or other supplementary electronic devices, still housed inside the rigid housing formed/delimited by the rear casing 2 and by the front half-shell 3.

The internal lighting components 5, moreover, may contribute to form also said supplementary electronic device(s).

In other words, the lighting assembly or assemblies 4 and/or the supplementary electronic device or devices preferably include one or more internal components 5, which have at least one part/portion made of polymeric material opaque to visible light, are arranged with said opaque-polymeric-material part/ portion resting on the inner surface of the rear casing 2 in at least one contact/support area or zone 6, and are rigidly secured in a non-removable manner to the rear casing 2 by means of a laser welding joint 7 made in said contact area 6.

Production of automotive lighting unit 1 firstly comprises the step of realizing, preferably via injection moulding, a rear casing 2 made of polymeric material opaque to visible light, which has, on its outer surface, one or more thickness-reducing recesses 8, each of which is shaped so as to locally reduce the thickness of rear casing 2 down to said predefined limit thickness W₀; and the step of realizing, preferably by injection moulding, at least one internal lighting component 5 having at least a part/portion made of opaque polymeric material.

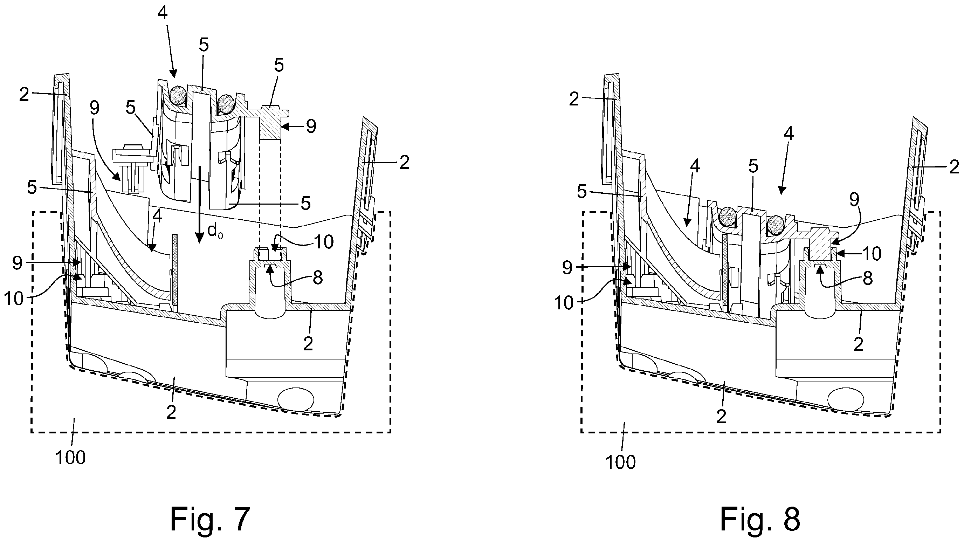

With reference to Figures 7 and 8, after having realized the rear casing 2 and the internal lighting component or components 5, production of automotive lighting unit 1 comprises the step of placing the internal lighting component or components 5 inside the rear casing 2, each with its opaque-polymeric-material part/portion resting on the rear casing 2 at a respective contact area 6 which, in turn, is locally aligned and opposed to a respective thickness-reducing recess 8; and then the step of securing the internal lighting component or components 5 directly to the rear casing 2 by making at least one laser welding joint at the/each contact area 6.

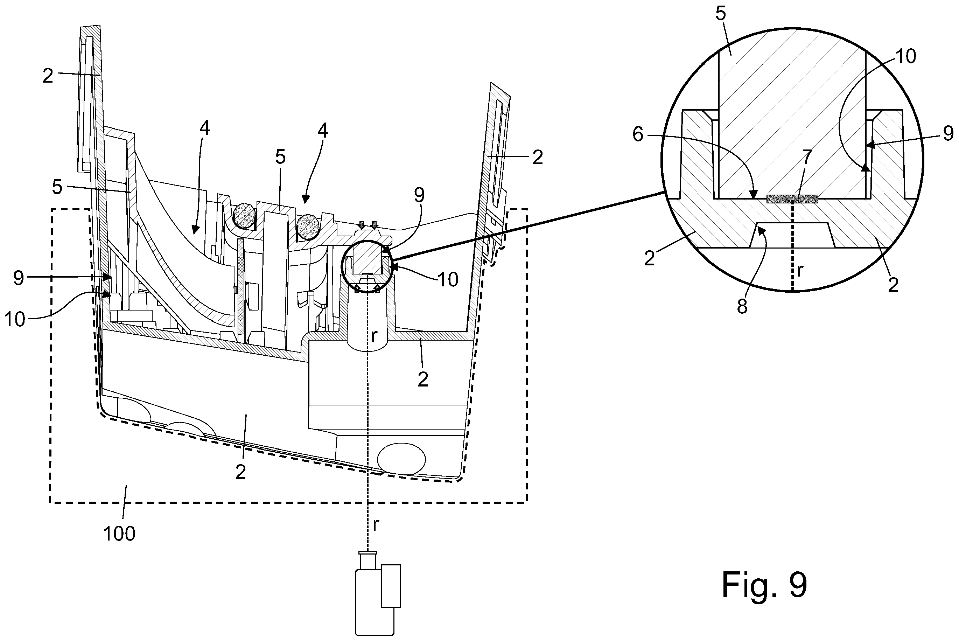

In further detail, with reference to Figure 9, the step of securing the internal lighting component or components 5 directly to the rear casing 2 entails temporarily directing a laser beam r towards the/each thickness-reducing recess 8 of the rear casing 2, so that the laser beam r can, in sequence, reach the bottom of the thickness-reducing recess 8, pass through the rear casing 2 up to reach the contact area 6, and lastly heat the opaque polymeric material located in the neighbourhood of the contact area 6 up to the melting/ softening temperature.

In other words, the laser beam r is adapted to temporarily melt the polymeric material present in the neighbourhood of said contact area 6.

Preferably, the laser beam or beams r directed towards the thickness-reducing recess or recesses 8 of the rear casing 2 furthermore has/have a wavelength λ₀ advantageously higher than 400 nm (nanometres) and more conveniently higher than 900 nm (nanometres).

In further detail, the step of securing the internal lighting component or components 5 directly to the rear casing 2 entails directing, for a predefined time interval advantageously lower than 30 s (seconds), one or more laser beams r against the outer surface of the rear casing 2, at the thickness-reducing recess or recesses 8 of rear casing 2, so that the laser beam or beam r can reach the bottom of the thickness-reducing recess or recesses 8, pass through the entire thickness of the rear casing 2 at the/each thickness-reducing recess 8, and then reach the support/contact area 6 located on the opposite side of the/each thickness-reducing recess 8.

Once the contact area or areas 6 has/have been reached, the laser beam or beams r heat up the opaque polymeric material located in the neighbourhood of the contact area 6 so as to bring it temporarily to the melting temperature and thus form the laser welding joint 7.

In further detail, the contact area 6 between the rear casing 2 and the corresponding internal lighting component 5 has been reached, the laser beam r locally heats up the opaque polymeric material of the internal component 5 to melting temperature. More or less simultaneously, the heat produced is transmitted by conduction also to the polymeric material forming the rear casing 2, thus bringing also the second polymeric material locally to melting temperature.

The subsequent re-hardening of the two polymeric materials joins the two pieces in a rigid non-removable manner.

With reference to Figures 7, 8 and 9, furthermore, the step of placing the internal lighting component or components 5 inside the rear casing 2 preferably entails inserting the fixing pin or pins 9 of the internal component(s) 5 each inside a respective receiving seat 10 realized on the inner surface of the rear casing 2.

Preferably, production of automotive lighting unit 1 moreover entails that the opaque polymeric material located between the thickness-reducing recess 8 and the contact area 6 towards which the laser beam r is directed, i.e. the opaque polymeric material that locally forms the rear casing 2, has an absorption coefficient µ (significantly) lower than that of the opaque polymeric material forming the internal lighting component 5, or rather the opaque-polymeric-material part/ portion made of the internal component 5.

With reference to Figure 9, preferably the step of securing the internal lighting component or components 5 directly to the rear casing 2 moreover entails also pressing/compressing the internal component(s) 5 against the rear casing 2 or vice versa, at the respective contact area or areas 6, while the laser beam r brings the opaque polymeric material located in the neighbourhood of the contact area 6 to melting/softening temperature.

The making of the laser welding joint 7 at the contact area 6 between the rear casing 2 and the internal lighting component 5 takes place for the following reasons, advantageously substantially without compromising the structural integrity of the outer surface of the rear casing 2.

It is known that a laser beam, as it penetrates into an opaque polymeric material, progressively loses its energy that is transferred to the opaque polymeric material in form of heat.

According to the Beer-Lambert law, the amount of energy transferred by the laser beam to the polymeric material per unit of length of the optical path increases with the growing of the laser-beam absorption coefficient µ associated with the polymeric material which is crossed by the laser beam.

However, experimental tests have shown that the laser beam, in a short starting section of its rectilinear path inside the opaque polymeric material, loses a relatively low amount of energy with respect to the rest of the path inside the opaque polymeric material.

In other words, in the starting section of the path of the laser beam within the opaque polymeric material, the opaque polymeric material behaves almost as if it were semi-transparent to the laser beam.

Clearly the length of this starting section with reduced energy loss is a function of the density and/or composition of the opaque polymeric material crossed, of the absorption coefficient µ of the opaque polymeric material crossed, and/or of the wavelength λ of the laser beam that travels through the opaque polymeric material.

Consequently, if the thickness of the opaque polymeric material is less than or equal to the length of this starting section with reduced energy loss, the laser beam succeeds in passing through the opaque polymeric material giving off to the polymeric material an amount of energy relatively low and such as not to melt or otherwise damage the polymeric material crossed.

In case of the opaque polymeric materials used in the sector of automotive lighting units, experimental tests have shown that the length of this starting section with reduced energy loss is less than about 2 mm (millimetres) and more advantageously less than about 1,5 mm (millimetres).

In other words, experimental tests have shown that, if the thickness of the rear casing 2 is less than about 2 mm (millimetres) and more advantageously less than about 1,5 mm (millimetres), the laser beam succeeds in crossing the entire thickness of the casing practically without melting the polymeric material crossed.

The thickness-reducing recesses 8 on the outer surface of the rear casing 2 are shaped/dimensioned so as to locally reduce the thickness W of the rear casing 2 to a limit thickness W₀, which is substantially equal to or advantageously lower than the length of said starting section with reduced energy loss.

In other words, the thickness-reducing recesses 8 on the outer surface of rear casing 2 locally reduce the thickness W of the rear casing 2 to values such as to allow the laser beam r that will form the laser welding joint 7, to cross substantially the entire thickness of rear casing 2 advantageously without melting the polymeric material crossed.

In addition, experimental tests have shown that the robustness of the laser welding joint 7 and/or the value of the limit thickness W₀ increase if the opaque polymeric material of the rear casing 2, i.e. the polymeric material which is crossed by the laser beam r, has an absorption coefficient µ significantly lower than that of the opaque polymeric material of the piece located downstream of the contact area 6, i.e. the adjacent opaque-polymeric-material part/portion of the internal component 5.

In other words, the temperature peak occurring in the opaque polymeric material located immediately downstream of the contact area 6, along the path followed by the laser beam r, significantly increases if the absorption coefficient µ of the polymeric material forming the rear casing 2 is preferably (locally) at least 30% lower than that of the polymeric material forming the adjacent opaque-polymeric-material part/ portion made of the internal lighting component 5.

Preferably, production of automotive lighting unit 1 lastly comprises the step of placing the front half-shell 3 on the mouth of the rear casing 2, and then the step of welding the front half-shell 3 to the rear casing 2 along the perimeter rim of said mouth.

With reference to Figures 7, 8 and 9, in the example shown, moreover, production of automotive lighting unit 1 preferably entails, before placing the internal lighting component or components 5 inside the rear casing 2 and/or before securing the internal lighting component or components 5 directly to the rear casing 2, the step of placing the rear casing 2 on a workpiece carrying fixture 100, which is structured so as to accommodate and advantageously also retain the rear casing 2 in a given assembly position, in which the mouth of the rear casing 2 is freely accessible from the outside and advantageously also turned upwards.

The advantages connected to use of the production method described above are remarkable.

The securing the internal lighting components 5 directly to the rear casing 2 by means of the laser welding joints 7 allows to eliminate all, or in any case the majority of, the metal screws currently used to fix the internal components of the automotive lighting unit to its rear casing, with considerable reduction in the resulting weight and production costs.

Furthermore, the immediate securing of the internal lighting component(s) 5 by means of the laser welding joints 7 allows to eliminate, or at least drastically reduce, the number of shoulders, centring pins and/or snap-on locking tabs usually present inside the rear casing of an automotive lighting unit, with consequent considerable simplification of the structure of the mould used to produce the rear casing 2.

Creation of these centring and/or snap-on locking systems, in fact, results in an extremely complicated shape of the mould that is used to produce the rear casing of an automotive lighting unit assembled in a traditional manner.

In addition, the thickness-reducing recesses 8 present on the outer surface of the rear casing 2 are easy to produce and eliminate all the operating limits associated with the welding of pieces made of polymeric material opaque to visible light.

The nominal thickness of the rear casing 2, in fact, is chosen so as to give the resulting piece a rigidity and a mechanical resistance appropriate for the use which the automotive lighting unit 1 is intended to. Clearly the nominal thickness makes the laser welding of internal components made of opaque polymeric material impossible.

Conversely, realizing the rear casing 2 with a nominal thickness equal to the limit thickness W₀ is not technically feasible because the resulting piece would not have sufficient structural resistance.

The presence of the thickness-reducing recesses 8 on the rear casing 2 allows to make the welding joints 7 while maintaining an adequate resistance and structural rigidity of the rear casing 2.

In addition, the use, in the support/contact area 6 between the internal component 5 and the rear casing 2, of opaque polymeric materials having different absorption coefficients µ drastically reduces the thermal stress to the opaque-polymeric-material piece which is crossed throughout the whole thickness by the laser beam that forms the welding joint 7.

Finally, it is clear that modifications and variations may be made to the production method of automotive lighting unit 1 without departing from the scope of the present invention.

For example, the rear casing 2 may be provided with one or more sectors made of transparent polymeric material, adjoining or surrounded by one or more sectors made of opaque polymeric material preferably having larger dimensions.

Clearly, in this variation the contact area 6 between the rear casing 2 and the/each internal lighting component 5 is located at the or one of the sectors made of opaque polymeric material that form the rear casing 2.

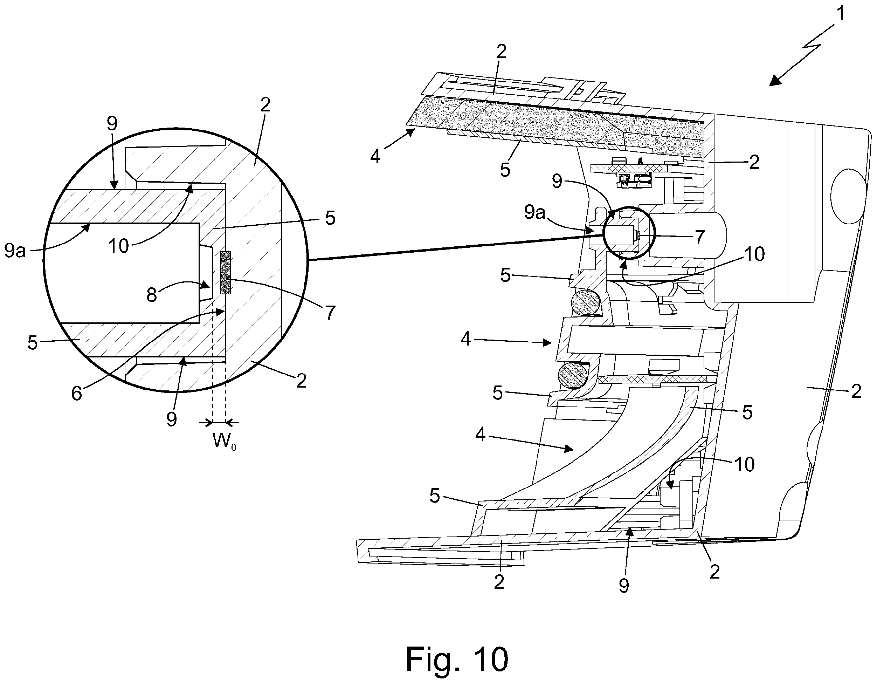

With reference to Figure 10, furthermore, the/each fixing pin 9 of the internal component 5 is preferably provided with a longitudinal blind hole 9a, which ends in the proximity of the distal end of said fixing pin 9.

In this embodiment, the fixing pin 9 is made of opaque polymeric material and has, on the bottom of the longitudinal blind hole 36, a small thickness-reducing recess 8, which is shaped so as to reduce, advantageously suddenly, the local thickness of the internal component 5 to said limit thickness W₀.

Also in this embodiment, obviously, the laser welding joint 7 is located behind the bottom of the thickness-reducing recess 8, at the contact area 6 between the rear casing 2 and the internal component 5.

Clearly in this embodiment variation, the laser welding joint 7 is formed with the aid of a laser beam that travels throughout the whole longitudinal blind hole 9a of fixing pin 9, up to the thickness-reducing recess 8, and then crosses the rear casing 2 where it has the limit thickness W₀ to reach the contact area 6.

In this embodiment variation, moreover, it is the opaque polymeric material forming the fixing pin 9 that has an absorption coefficient µ lower than that of the opaque polymeric material locally forming the rear casing 2.

In other words, the opaque polymeric material located between the thickness-reducing recess 8, or rather the bottom of the thickness-reducing recess 8, of internal component 5 and the contact area 6 on the opposite side of the internal component 5, or rather of the fixing pin 9, preferably has an absorption coefficient µ lower than that of the opaque polymeric material forming the part of rear casing 2 on which rests the internal lighting component 5, or rather the opaque-polymeric-material part/portion of internal component 5.

## Claims

1. An automotive lighting unit (1) comprising: a rear casing (2), which is concave in shape, is made of opaque polymeric material and is adapted to be fixed to the vehicle body; a front half-shell (3), which is placed to close the mouth of said rear casing (2) and is provided with at least one transparent or semi-transparent sector; and at least one lighting assembly (4), which is located inside the rear casing (2) and is adapted to backlight the front half-shell (3);
the automotive lighting unit (1) being provided with at least one internal component (5), which is at least partially made of opaque polymeric material and rests with its part made of opaque polymeric material on the inner surface of the rear casing (2), in at least one contact area (6);
the automotive lighting unit (1) being **characterized in that** said rear casing (2) and said internal component (5) are rigidly fixed to each other by means of a laser welding joint (7) formed at said contact area (6).

2. The automotive lighting unit according to claim 1, wherein one on choice among said rear casing (2) and said internal component (5) has, on the opposite side with respect to said contact area (6), a small thickness-reducing recess (8) which is shaped so as to locally reduce the thickness of said rear casing (2) or of said internal component (5) up to a predefined limit thickness (W₀); the laser welding joint (7) being located behind said thickness-reducing recess (8).

3. The automotive lighting unit according to claim 2, wherein said limit thickness (W₀) allows the laser beam that makes the laser welding joint (7) to pass through said rear casing (2) or said internal component (5) substantially without causing the polymeric material to melt up to the contact area (6).

4. The automotive lighting unit according to claim 2 or 3, wherein said limit thickness (W₀) is lower than the mean value of the thickness of the rear casing (2) or of the internal component (5) at said contact area (6).

5. The automotive lighting unit according to claim 2, 3 or 4, wherein said limit thickness (W₀) ranges between 1 and 2 mm.

6. The automotive lighting unit according to any one of claims from 2 to 5, wherein said limit thickness (W₀) is lower than 1,5 mm.

7. The automotive lighting unit according to any one of claims from 2 to 6, wherein said thickness-reducing recess (8) is shaped so as to locally reduce the thickness of the rear casing (2) or of the internal component (5) by at least 25%.

8. The automotive lighting unit according to any one of claims from 2 to 7, wherein said thickness-reducing recess (8) has a substantially step profile.

9. The automotive lighting unit according to any one of claims from 2 to 9, wherein said rear casing (2) and said internal component (5) are made, at least in the neighbourhood of said contact area (6), of opaque polymeric materials which have different laser-beam absorption coefficients (µ); said thickness-reducing recess (8) being located in the piece with the lower laser-beam absorption coefficient (µ).

10. The automotive lighting unit according to any one of claims from 2 to 9, wherein said thickness-reducing recess (8) is located on the outer surface of the rear casing (2).

11. A production method of an automotive lighting unit (1) that comprises: a rear casing (2), which is concave in shape and is adapted to be fixed to the vehicle body; an at least partially transparent, front half-shell (3) which is arranged to close the mouth of said rear casing (2); and at least one lighting assembly (4), which is located inside the rear casing (2) and is adapted to backlight the front half-shell (3);
said production method being **characterized in that** it comprises the steps of:
- realizing a rear casing (2) with at least one sector made of opaque polymeric material;
- realizing at least one internal lighting component (5) having at least a portion made of opaque polymeric material;
- placing said at least one internal lighting component (5) inside the rear casing (2), with said portion made of opaque polymeric material resting on the sector made of opaque polymeric material of the rear casing (2), in at least one contact area (6);
- securing said at least one internal lighting component (5) to the rear casing (2) by making at least one laser welding joint (7) at said at least one contact area (6).

12. The production method of an automotive lighting unit according to claim 11, wherein a first piece on choice among said rear casing (2) and said internal lighting component (5) has, on the opposite side with respect to said contact area (6), a small thickness-reducing recess (8) which is shaped so as to locally reduce the thickness of the piece down to a predefined limit thickness (W₀); and wherein the step of securing the internal lighting component (5) to the rear casing (2) entails directing, for a predefined time interval, at least one laser beam (r) towards said thickness-reducing recess (8), so that said laser beam (r) can, in sequence, reach the bottom of the thickness-reducing recess (8), pass through said first piece up to reach the contact area (6), and then temporarily melt the polymeric material present in the neighbourhood of said contact area (6).

13. The production method of an automotive lighting unit according to claim 12, wherein said limit thickness (W₀) is such as to allow said laser beam (r) to pass through the thickness of said first piece substantially without causing the melting/softening of the polymeric material up to the contact area (6).

14. The production method of an automotive lighting unit according to claim 12 or 13, wherein said predefined time interval is lower than 30 seconds.

15. The production method of an automotive lighting unit according to claim 12, 13 or 14, wherein said first piece is made, at least beneath said thickness-reducing recess (8), of an opaque polymeric material having a laser-beam absorption coefficient (µ) lower than that of the adjacent piece.

16. The production method of an automotive lighting unit according to claim 15, wherein the difference between the values of the two laser beam absorption coefficients (µ) is greater than 250.

17. The production method of an automotive lighting unit according to any one of claims from 12 to 16, wherein said at least one laser beam (r) has a wavelength (λ₀) higher than 900 nm.

18. The production method of an automotive lighting unit according to any one of claims from 12 to 17, wherein the step of securing the internal lighting component (5) to the rear casing (2) entails also pressing said at least one internal lighting component (5) against the rear casing (2), at said contact area (6), while said at least one laser beam (r) heats up the opaque polymeric material in the neighbourhood of said contact area (6).

19. The production method of an automotive lighting unit according to any one of claims from 12 to 18, wherein said thickness-reducing recess (8) is located on the outer surface of the rear casing (2).

20. The production method of an automotive lighting unit according to any one of claims from 11 to 19, wherein said at least one internal lighting component (5) is part of said lighting assembly (4).
